# EUROPEAN PATENT SPECIFICATION

(11) **EP 1 094 882 B1**
(45) Date of publication and mention of the grant of the patent: **19.04.2006**
(21) Application number: 99929977.9
(22) Date of filing: 02.06.1999
(51) Int. Cl.: B01D 53/81, B01D 53/50, F23J 15/06

(54) **A METHOD TO CLEAN FLUE GAS**
VERFAHREN ZUR REINIGUNG VON ABGAS
PROCEDE D'EPURATION DES FUMEES

(30) Priority: 08.06.1998 SE 9802013
(43) Date of publication of application: 02.05.2001
(73) Proprietor: Fagersta Intervex AB, 737 40 Fagersta (SE)
(72) Inventor: TIBERG, Lars, S-770 20 Söderbärke (SE); BERGMAN, Jonas, S-722 23 Väster s (SE); MORSING, Magnus, S-732 32 Fagersta (SE)
(74) Representative: Aslund, G Roland
(86) International application number: PCT/SE1999/000753
(87) International publication number: WO 1999/064138

(56) References cited:
- WO-A1-85/04237
- WO-A1-94/08697
- SE-C2- 507 534

## Description

### BACKGROUND OF THE INVENTION

### 1. Field of the invention:

The present invention concerns a method to reach an efficient cleaning of flue gases from combustion. The main components to be eliminated are sulphur oxides, hydrochloric acid and dust (fly ash). If desirable, residual energy can be regained by a regenerative heat exchange process. The apparatus consist of a reactor unit with a number of unit cells where the flue gases are intermittently cleaned and, if desirable, the residual heat regained.

### 2, Background information:

The demands of cleaning of flue gases that are let out from combustion plants have been drastically strengthened in the last years. The fuel contains among other substances sulphur and chlorine that must be taken care of. The same thing concerns fly ash and dust. Fuels are often moisty, and the moisture, together with the hydrogen content of fuel create a water vapour content of the flue gas of roughly 10-20 X by volume. The sulphur from the fuel forms sulphur oxides upon combustion and on cooling below the acid dew point, sulphurous acid and sulphuric acid, which are very corrosive and aggressive to the plant, prcipitate. A similar reaction occurs with chlorine, which forms hydrochloric acid on combustion.

If too much water vapour, return flue gases and even other contaminants are intoduced into the combustion air, the combustion may be violated.

The Swedish patent No 442777 describes a plant for desulphurisation of flue gases and preheating of combustion air. The flue gases are intermittantly passing two flue gas cleaning reactors. The sulphur is precipitated on limestone in one reactor when residual heat, which is built up in the limestone of the other reactor is transferred to the combustion air. The flue gas cleaning is not done according to the counter flow technicque. In such a case, moisture and acidic components may very well remain in the flue gas after the passage of the reactor and the plant can be seriously damaged by corrosion. Cleaning by the counter flow technique means that flue gas entering the reactor comes first in contact with material which has been taking up contaminents for the longest time, then they pass through a reaction layer of even thickness and they leave the reactor in contact with clean, regenerated limestone which has just been transported into the reactor. In modern technique, it is hardly possible to use another technique than the counter flow process when demands on low emissions are high.

It has also been shown that flue gas cleaners with only two separate limestone beds give problems at the interchange of air and flue gas. The valve system will be complicated and expensive, and at each interchange, a quantity of flue gas will mix into the combustion air and may cause disturbances in the combustion process.

In some cases it is a great problem that the air takes up more and more moisture which condenses from the flue gases. The moisture is returned to the combustion chamber, the flue gas water content increases still more and eventually the high water content disturbes the combustion process seriously. R very high moisture content in the air and in the flue gas cause serious corrosion in the equipment.

The heat of the flue gases is not always used for heating of the combustion air. As an example, it may be mentioned that the flue gases which have been cooled and cleaned in one bed may be reheated in the second bed. In this case, the gas are not as corrosive after the elimination of acids in the first step and the drying by the reheating in the second step. The futher processing of the flue gases is simplified by this processas as they are heated above their dew point.

R futher problem with the double bed systems is that it causes great temperature variations of both gas and combustion air.

It is sometimes advantageous to lead more than two gas flows through stone beds. As an example one could cool flue gas, reheat flue gas and heat combustion air simultaneously. In this way the flue gas can be cooled to a lower temperature, which is sometimes desirable when contaminats shall be condensed. The reheating reduces the corrosivity of the flue gas and the heating of combustion air saves energy and improves the combustion .

The SE-C2-507534 describes a method for cleaning flue gases with periodical switching between two parallel reactors.

### SUMMERY OF THE INVENTION.

The invention is defined in claim 1.

Surprisingly it has now appeared that an almost ideal reactor without the disadvantages of the double bed system can be built in a simple monner.The two solid material beds are divided into several chambers that can be successively blown with the different gases. In some chambers the flue gases are cleaned and the beds are simultaneously heated. In some other chambers, combustion air is heated. In a few other chambers, flue gas is flushed with air and air is flushed with flue gas. The chambers are placed in a circle around a valve system. The chambers and the value system are built in such a way that they can be rotated one against the other. The valve system is built to allow the chambers to be successively blown with gas,flushed with air and flushed with flue gas when the system makes one rotation. The flushing system is designed to transfer flue gas from one chamber to a chamber placed diagonally and vice versa. The flue gas cleaning is naturally arranged according to the counter flow principle, which has been described above.

Normally crushed limestone is used as bed material, but also other basic stone material like dolomit and magnesia carbonate and basic waste material can be used. The reaction properties of limestone is enhanced at the presence of chlorides which may come from the flue gases or may be added during the process for example at the tumbling of the stones.

The invention is not necessarily restricted to a succesive dividing of the chambers for flue gases, combustion air and flush gases. As shown in example 3below still more gases can flow through the reactor simultaneously.

### BRIEF DESCRIPTION OF THE DRAWINGS

The invention will be described below with 3 examples, in the claims and with the 3 figures below wherein:
**Figure 1** describes a plant in perspective and partly cut open where the chambers are rotating while the valve system is fixed.
**Figure 2** describes the same plant i a more schematic form and
**Figure 3** shows a plant in a more schematic form where the valve system is rotating while the chambers are fixed.
**Figure 4** shows the valve unit seen from below and
**Figure 5** shows the central duct seen from above.

### DESCRIPTION OF THE PREFERRED EMBODIMENT

### EXAMPLE 1:

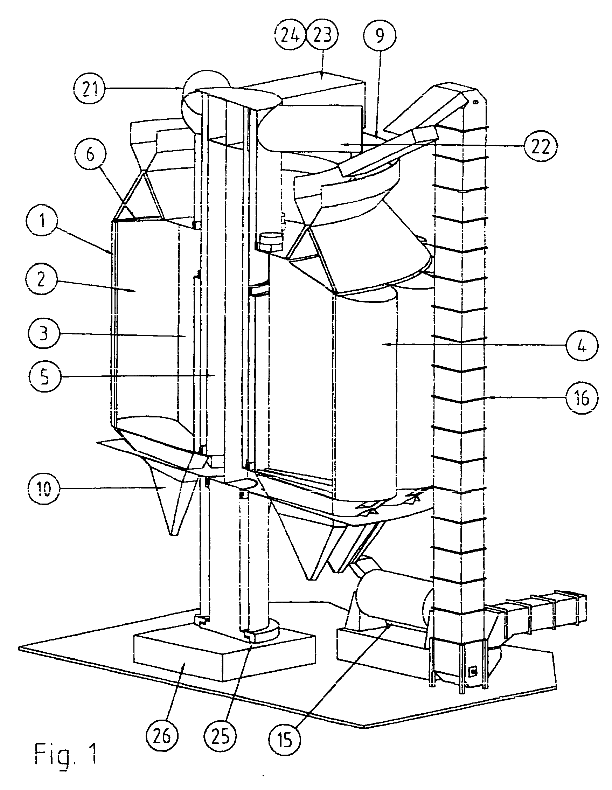

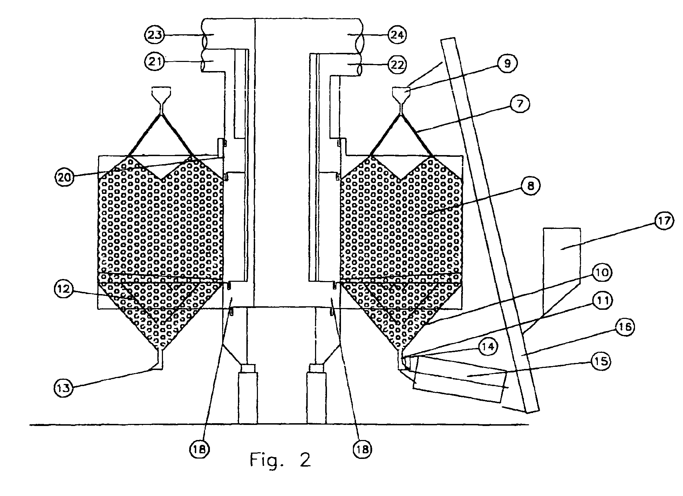

The example describes a reactor, fig 1-2, for cleaning of flue gases and heating of combustion air.

The reactor consists of a cylindrical unit, 1, with a vertical axis. The reactor is divided into 24 similar chambers ,2, by vertical walls ,3. The walls ,3, extend from the mantle surface 4, of the cylindrical unit ,1, radially towards the vertical covering of a centralfy placed tubular valve unit ,5. The cylindrial unit ,1, and consequently its chambers ,2, are covered with a lid ,6. R feed tube ,7, ends in the lid ,6. The feed tube ,7, feeds granular limestone, which constitutes the bed ,8, into the chambers ,2, The bed matrial is transported through the feed tubes ,7, down into the chambers ,2, from an open feed chute ,9, that is connected to all the feed tubes ,7.

The chambers ,2, continue downwards into hollow cones ,10, with the point downwards. The points are connected to exit feed tubes ,11, for feeding spent granular limestone from the beds ,8, in the chambers ,2, for reconditioning. Insiodes the cones ,10, there are guide vanes ,12, to guide the granular limestone in the bed ,8, in such a way that an even downward movement is maintained in the whole cross-section of the bed ,8,

From the exit feed tube ,11, the granular limestone of the bed ,8, is fed out on a plane ,13, just below the end of the exit feed tube ,11. A not moving scraper ,14, causes the stone to fall down into a tumbler ,15, as a consequence of the rotation of the cylindrical unit ,1. It is obvious that the flow of granular material through the chambers ,2, is controlled by the rotation velocity of the cylindrical unit ,1, and of how much granular material that the scraper ,14. removes on each rotation. The stone flow can be controlled in a simple way by moving the scraper ,14, in a radial direction from the valv unit ,5. In the tumbler ,15, gypsum, sulphite and flyash on the surface of the limestone is separated from the stones and the cleaned stones are broughht back to the bed ,8, by a vertical transporter ,16, the feed chute ,9, and the feed tubes ,7, and can again take part in the gas cleaning process together with new stone material that is fed from a container 17.

Each chamber ,2, has a lower gas port ,18, just below the upper end of the hollow cone ,10. At intervals, hot flue gas flows radially into the chambers ,2, through the lower gas port ,18, from the valve unit ,5, and at next intervals hot air flows out of the same port into the valve unit ,5. From the lower gas port ,18, the gas flows outwards in a space between the hollow cone ,10, and the vertical walls ,3, of the chamber ,2, towards the mantle surface ,4, and futher up in the hollow cone ,10, into a gas duct. The duct is open on the bottom side, allowing gas to flow out into the stone bed ,8. Of coarse, air can flow in the opposite direction from the bed ,8, through the duct down through the lower gas port ,18, out into the valv unit ,5. Correspondingly there is an upper gas port ,20, in each chamber ,2, above the be ,8, and close to the lid ,6, where cleaned flue gas can be led out of the camber ,2, into an exit flue gas duct ,21, in the valv unit ,5, but also cold combustion air for heating can be led into the chamber ,2.

The hot flue gases from the combustion are led to entrance flue gas duct ,23, of the value unit ,5, through the lower gasport ,18, into the chamber ,2. The entrance flue gas duct ,23, is made to open to 9 other chambers ,2, placed one after the other in the cylindrical unit ,1.The flue gas flows, evenly distributed from lower gas port ,18, up through the chamber ,2, and out through the upper gas port ,20, to an exit flue gas duct ,21, and leowes the plant by a ductsystem (not shown).

The combustion air is also led into the valve unit ,5, through an air intake ,22, and is simultaneously connected to 9 other chambers ,2, at their upper gas port , 20, and flow downwards through the bed ,8, under heating and are taken out through the lower gas port ,18, to an air exit duct ,24, and futher to the combustion chamber.

Between these two groups of chambers ,2, those for flue gas cleaning and those for combustion air heating, there are four chambers ,2, for flushing. These for chambers ,2, are connected by a diagonal duct in the bottom of thr valv unit ,5.

On rotation of the cylindrical unit ,1, two chambers ,2, filled with flue gas will successivly come to the diagonal duct for flushing and two chambers ,2, filled with heated air will come to the opposite side of the diagonal flushing duct. If no measures are taken, the rotation will bring flue gases into the air flow and air into the gas flow. If this happens, the gas cleaning as well as the combustion could be disturbed. To avid this, a quantity of air is blown into one of the flush chambers ,2, to empty the chamber ,2, from flue gas. This cause the flue gases to be moved through the connection duct to the other flush chambers ,2, which shall be filled with fluee gases. Air that has been heated is led out through the air exit duct ,24. In this way, mixing of air and flue gas is minimised.

On futher rotation of the cylindrical unit ,1, flush chambers ,2, which have been filled with air move in among the chambers ,2, which are blown with air, and the chambers ,2, that have been flushed with flue gas move in among the flue gas chambers ,2.

The whole rotating system is carried by a bearing ,25, and is equipped with a drive system (not shown). The bearing ,25, and the drive system rest upon a fondation ,26. The valve unit ,5, is anchored to the foundation ,26.

### EXAMPLE 2:

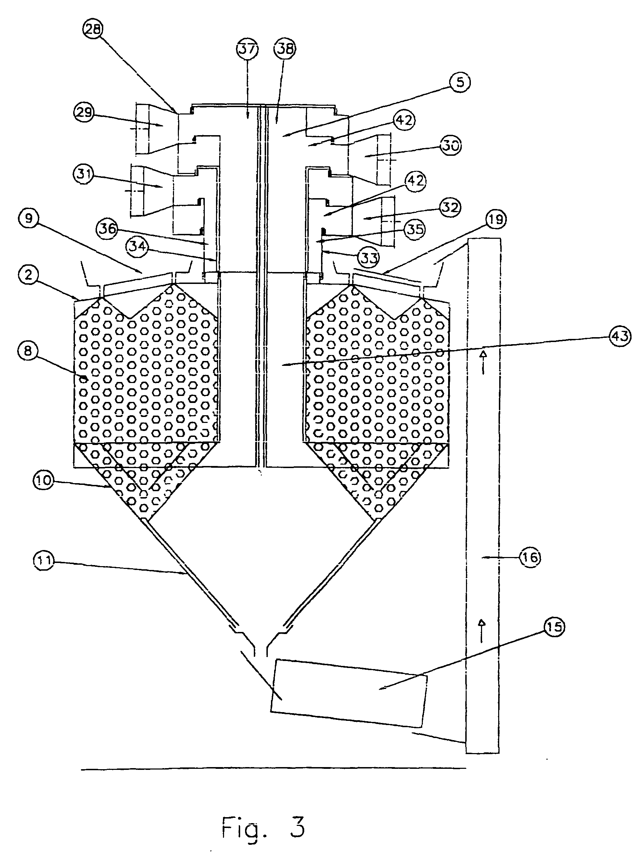

This example, fig 3, illustrates how flue gas is cleaned with an intermediate cooling and condensation of water vapour. As the plant is big and contains a large amount of limestone with a considerable weight, the cylindrical unit ,1, with the chambers ,2, are fixed while the central valve unit ,5, rotates. There are 24 chambers ,2, 10 of which are in a position of flue gas cleaning, 4 chambers ,2, are in a position of flushing with two on each side of the first cleaning chambers ,2, and the remaining 10 are in a position for a second flue gas cleaning and for cooling of the bed ,8. Simultaneously, the temperature of the flue gases leaving the plant is rasised to a level well above the de point.

Between the two passages of groups of chambers ,2, the flue gas is cooled in a recuperator (not shown). In the recuperator the flue gas is cooled in order to be used as a cooling media for the chambers ,2, on the secong passage of the cylindrical unit ,1. At the cooling in the recuperator water vapour is condensed from the flue gas and the condensed water is separated from the gas and led away. The heat that is liberated on condensation is used for preheating of combustion air for the boiler. The air which is heated in the recuperator will not take up water vapour like the cooling air in example 1. In some cases, too much moisture can be taken up by the air in the bed ,8, and be brought into the combustion chamber, causing disturbances in said combustion chamber and even prevent on efficient combustion.

The chambers ,2, are similar to those in example 1. The flue gases flow upwards through the chambers ,2, during their first passage and counter to the stone that flows slowly downwards in the bed ,8. On the second passage, when the flue gas has been cooled and serves as a cooling media for the stones, the gas flows downwards in the same direction as the stones. The exit feed tubes, 11, from the bottom cones ,10, slope towards the centre of the cylindrical unit ,1. The exit feed is controlled jointly for all exit tubes ,11, when the granular material is fed down into a tumbler ,15, for regeneration and to the vertical transporter ,16, up to the feed chute ,9, which in this case is wider and equipped with a rotating scrape ,19, for distrubution of limestone to all the chambers ,2.

The flow of the flue gas in and out of the plant goes through four external ducts through a central distribution centre ,28, which is equipped with four pipe joints ,29-32, in four levels, one over the other. Uncleaned flue gas enters the plant through the top joint ,29. Cleaned and reheated gas leaves the plant through the second joint ,30. Flue gas that has passed the chambers ,2, once and has been cleaned leave the plant through the third joint ,31, to be futher cooled in a recuperator (not shown) and gas, that has been cooled in the recuperator, enter the plant by the fourth joint ,32, to be heated when they flows downwards in the chambers ,2, before they leave the plant through the second joint ,30.

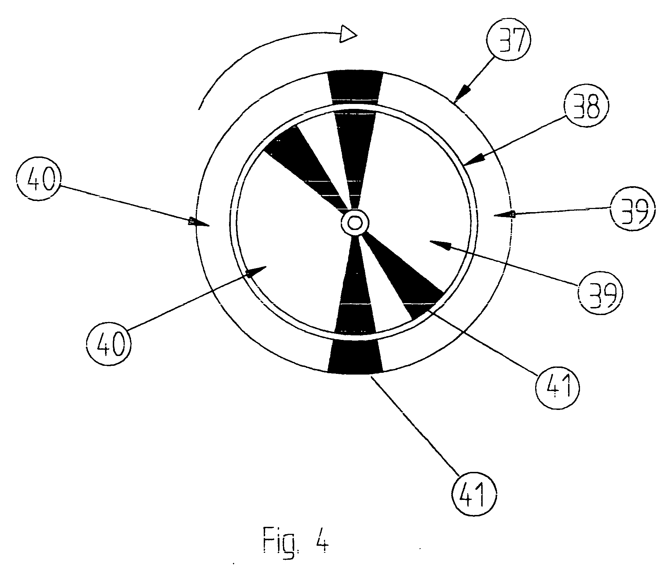

Each joint, 29-32, is connected to ring chambers ,33-36. The distribution centre ,28, consists of four concentric ring chambers ,33-36, each with a joint ,29-32, placed one above the other. Inside the ring chambers ,33-36, there is a rotating volv unit ,fig 4, in the form of a vertical tube device streching throuh the four ring chambers, 33-36. The vertical device consists of two concentric tubes, 37-38, one outer ,37, which extends only from the second ,34, of the four ring chambers, 33-36, and downwards, and an inner tube, 38, which extends from the top ring chamber ,33, and downwards. The outher tube ,37, and the inner tube ,38, are each divided in two halves by separating walls, 41, forming two ducts in form of two halves ,39-40, in each tube ,37-38. Each halve ,39-40, has openings, 42, in its periphery leading to each ring chambers ,33-36. In this way, one of the halves ,39, of the inner tube ,38, will always have an opening ,42, to the top joints ,29, for incoming flue gas, the second halves ,40, will have an opening ,42, to the second joint ,30, for outgoing, reheated gas, one second halves ,40, of the outher tube ,37, will have contact with the third joint ,31. for flue gases which have passed the chambers ,2, only once, and the second second halves ,40, of the outher tube ,38, will have contact with the fourth joint ,32, for gas that comes from the recuperator after cooling. When the valve unit ,5, rotates, each of the four ducts ,39-40, will be in contact with the same joint ,29-32.

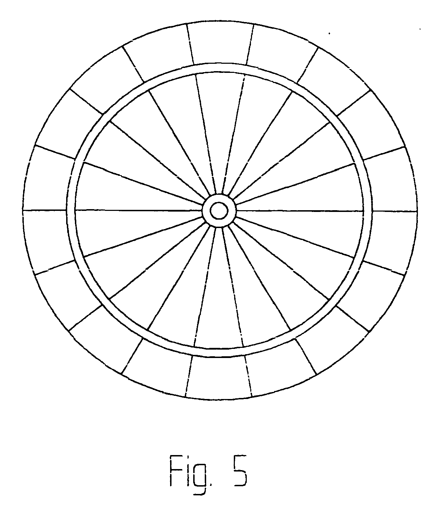

The bottom end of the rotating valve unit ,5, just below the fourth ring chamber ,36, is a horizontal surface, which leaves the four ducts ,39-40, exposed. This bottom endis shown on fig. 4.There is a vertical round gas duct ,43, below the rotating valve unit ,5, which is divided by vertical walls into the same numbers of sectors as there are chambers ,2, in the cylindrical unit ,1. The duct ,43, is shown from above on fig. 5. Each lower gas port ,18, is connected to the correspnding duct of the round gas duct ,43, that has the same diameter as the inner tube ,38, of the rotating valve unit ,5, and it ends upwards in a horisontal surface which lies very close to the bottom surface of the rotating valve unit ,5,. In the some way the top gas ports ,20, of the cylindrical unit ,1, are connected to that part of the vertical round gas duct ,43, that has the same diameter as that of the outher tube ,37, of the rotating valve unit ,5.

When the valve unit ,5, rotates, its four ducts ,39-40, will sucessively be connected to new sectors in the cylindrical unit ,1, and the chambers ,2, will get the same succession of gas flows as in the cylindrical unit ,1, with a fixed valve unit ,5.

### EXAMPLE 3:

In this case, there will be two passes of flue gases through the chambers ,2, as well as one passage for heating of combustion air for the combustion plant. This arrangement can be used for instance for refuse burning plants. There is a great advantage that the gases are cleaned in two sets of chambers ,2, with intermediate cooling of the beds ,8, in the chambers ,2, with air. The cleaning will be made in two different temperatur regions. The equipment can be compared with that from example 2, with the chambers ,2, divided in three groups. In the first group uncleaned gases flow through the chambers ,2, in the second combustion air and in the third the flue gases, which are cleaned a second time.

## Claims

1. A method to clean flue gases from combustion plants and regain heat from said gases **caracterized in**
that a number of similar chambers (2) are filled with granular material (8) and arranged in a circle around a valve unit (5)
that the chamber circle (2) and the value unit (5) are rotating in relation to each other and
that the granular material (8) is lead in horizontal section and even flow downward through the chambers (2) and exit for regenerating and then to the top of the chambers (2) together with new material when necessary
that the flue gas is directed from the bottom upwards for cleaning and cooling in one group of chambers (2) and cooling gas in another group of chambers (2) from the top downwards,

2. R method according to claim 1 **caracterized in**
that a few chambers (2) between the two main groups are successively connected diagonally for flushing of the chambers (2)

3. A method according to claim 1 or 2 **caracterized in**
that the cooling gas is air.

4. A method according to claim 1 or 2 **caracterized in**
that the cooling gas consists of cleaned gas that has been cooled in a heat exchanger.

5. R method according to claim 1 **caracterized in**
that the cooling gas has been cleaned in a second step.

6. A method according to claim 1 **caracterized in**
that the valve unit (5) rotates inside the chamber circle (2).

7. A method according to claim 1 **caracterized in**
that the chambers (2) rotate round the value unit (5).

8. R method according to claim 1-7 **caracterized in**
that the chambers (2) are filled with limestone.

9. R method according to claim 1-8 **caracterized in**
that clorides are added to the bed matrial (8).

## Revendications

1. Procédé d'épuration des fumées d'usines d'incinération et de récupération de la chaleur des susdites fumées,
**caractérisé en ce que**
un nombre de chambres similaires (2) est rempli de matériau granulaire (8) et disposé en cercle autour d'une unité de soupape (5),
les chambres circulaires (2) et l'unité de soupape (5) tournent l'une vers l'autre et
le matériau granulaire (8) est amené en section transversale horizontale et se dirige de façon uniforme vers le bas à travers les chambres (2) et sort pour la régénération et est ensuite amené à la partie supérieure des chambres (2), avec le cas échéant du nouveau matériau
la fumée est dirigée depuis le bas vers le haut pour l'épuration et le refroidissement dans un groupe de chambres (2) et le gaz de refroidissement dans un autre groupe de chambres (2) est dirigé depuis le haut vers le bas.

2. Procédé selon la revendication 1, **caractérisé en ce que** quelques chambres (2) sont reliées l'une après l'autre diagonalement entre les deux groupes principaux, pour le rinçage des chambres (2).

3. Procédé selon la revendication 1 ou 2, **caractérisé en ce que** le gaz de refroidissement est de l'air.

4. Procédé selon la revendication 1 ou 2, **caractérisé en ce que** le gaz de refroidissement consiste en du gaz épuré refroidi dans un échangeur de chaleur.

5. Procédé selon la revendication 1, **caractérisé en ce que** le gaz de refroidissement a été épuré dans une seconde phase.

6. Procédé selon la revendication 1, **caractérisé en ce que** l'unité de soupape (5) tourne dans la chambre circulaire (2).

7. Procédé selon la revendication 1, **caractérisé en ce que** les chambres (2) tournent autour de l'unité de soupape (5).

8. Procédé selon la revendication 1-7, **caractérisé en ce que** les chambres (2) sont remplies avec du calcaire.

9. Procédé selon la revendication 1-5, **caractérisé en ce que** des chlorures sont ajoutés aux matériaux du lit (8).

## Patentansprüche

1. Verfahren, um Abgase von Verbrennungsanlagen zu reinigen und Hitze aus besagten Gasen wiederzugewinnen,
**gekennzeichnet dadurch, dass**
eine Anzahl von ähnlichen Kammern (2) mit Granulat (8) gefüllt und in einem Kreis um eine Ventileinheit (5) herum angebracht sind,
dass der Kammerkreis (2) und die Ventileinheit (5) gegeneinander rotieren und
dass das Granulat (8) in waagrechtem Querschnitt und gleichmäßiger Strömung nach unten durch die Kammer (2) geführt wird und zum Regenerieren austritt und dann zur Spitze der Kammer (2) geführt wird, zusammen mit neuem Material falls nötig
dass das Abgas vom Boden nach oben zum Reinigen und Kühlen in einer Gruppe von Kammern (2) geführt wird und Kühlgas in einer anderen Gruppe von Kammern (2) von oben nach unten.

2. Verfahren nach Anspruch 1, **gekennzeichnet dadurch, dass** einige Kammern (2) zwischen den beiden Hauptgruppen hintereinander diagonal verbunden sind, zum Spülen der Kammern (2).

3. Verfahren nach Anspruch 1 oder 2, **gekennzeichnet dadurch, dass** das Kühlgas Luft ist.

4. Verfahren nach Anspruch 1 oder 2, **gekennzeichnet dadurch, dass** das Kühlgas aus gereinigtem Gas besteht, das in einem Rückkühler gekühlt wurde.

5. Verfahren nach Anspruch 1, **gekennzeichnet dadurch, dass** das Kühlgas in einer zweiten Phase gereinigt wurde.

6. Verfahren nach Anspruch 1, **gekennzeichnet dadurch, dass** die Ventileinheit (5) in dem Kammerkreis (2) rotiert.

7. Verfahren nach Anspruch 1, **gekennzeichnet dadurch, dass** die Kammern (2) um die Ventileinheit (5) herum rotieren.

8. Verfahren nach Anspruch 1-7, **gekennzeichnet dadurch, dass** die Kammern (2) mit Kalkstein gefüllt sind.

9. Verfahren nach Anspruch 1-5, **gekennzeichnet dadurch, dass** Chloride zu dem Bettmaterial (8) hinzugefügt werden.
